# EUROPÄISCHE PATENTANMELDUNG

(11) **EP 1 970 527 A2**
(43) Veröffentlichungstag der Anmeldung: **17.09.2008**
(21) Anmeldenummer: 08102334.3
(22) Anmeldetag: 06.03.2008
(51) Int. Cl.: E21B 43/08, E03B 3/20, B01D 29/33

(54) **Stahlrohr mit einer Filterzone für Bohrbrunnen**

(30) Priorität: 10.03.2007 DE 202007003630 U
(71) Anmelder: Stüwa Konrad Stükerjürgen GmbH, 33397 Rietberg (DE)
(72) Erfinder: Stükerjürgen, Ralf, 33397 Rietberg (DE)
(74) Vertreter: Dantz, Jan Henning

(57) **Zusammenfassung**

Stahlrohr (1) mit einer Filterzone (2) in Schlitzbrückenfilteranordnung für Bohrbrunnen, wobei die Schlitzbrückenfilteranordnung aus einer Vielzahl von aus der Rohrwandung (3) herausgeprägten Schlitzbrücken (4) besteht, welche sich in Längsrichtung des Stahlrohres (1) erstrecken, jeweils gruppenartig in Ringzonen auf dem Umfang des Stahlrohres (1) und gruppenweise in Achsrichtung des Stahlrohres (1) einander überlappend sowie in Umfangsrichtung gegeneinander versetzt angeordnet sind, wobei der freie Durchlass der Filterzone (2) etwa 8 bis 10 % der Gesamtfläche der Filterzone (2) beträgt.

## Beschreibung

Die vorliegende Erfindung betrifft ein Stahlrohr mit einer Filterzone in Schlitzbrückenfilteranordnung für Bohrbrunnen, wobei die Schlitzbrückenfilteranordnung aus einer Vielzahl von aus der Rohrwandung herausgeprägten Schlitzbrücken besteht, welche sich in Längsrichtung des Stahlrohres erstrecken, jeweils gruppenartig in Ringzonen auf dem Umfang des Stahlrohres verteilt und gruppenweise in Achsrichtung des Stahlrohres einander überlappend sowie in Umfangsrichtung gegeneinander versetzt angeordnet sind.

Stahlrohre für Bohrbrunnen der gattungsgemäßen Art sind allgemein bekannt.

Grundlagen und Begriffsbestimmungen für derartige Stahlrohre finden sich in DIN 4922, die den vorausgesetzten Stand der Technik detailliert offenbart.

Der vorliegenden Erfindung liegt die Aufgabe zugrunde, ein Stahlrohr der gattungsgemäßen Art zu schaffen, welches gegenüber der empfohlenen Ausführungsform nach DIN 4922 verbessert ist.

Diese Aufgabe wird erfindungsgemäß dadurch gelöst, dass der freie Durchfluss der Filterzone etwa 8 bis 10 % der Gesamtfläche der Filterzone beträgt.

Durch die Vergrößerung des freien Durchflusses wird die Leistung eines derartigen Stahlrohres deutlich verbessert insofern, als eine größere Menge Wasser in das Stahlrohr eintreten kann, als dies mit bekannten Ausführungsformen möglich ist, bei denen der freie Durchfluss in der Regel etwa bei 6 % liegt.

Bevorzugt wird dabei eine Ausführungsform, bei der die Vergrößerung des freien Durchflusses dadurch erreicht wird, dass bei einer Wanddicke (s) des Stahlrohres von etwa 4 bis 6 mm die Schlitzbreite (w) etwa 4,5 mm, die Stegbreite (b) etwa 5,3 mm, die mittlere Schlitzlänge (a₂) etwa 17 mm, die Schlitzbrückenöffnung (h) etwa 0,5 bis 1 mm und die Teilung (t) etwa 37 mm beträgt.

Die vorgegebenen Bezeichnungen und zugehörig in Klammern gesetzten Formelzeichen ergeben sich aus DIN 4922, so dass eine detaillierte Erläuterung dieser Begriffe und Formelzeichen nicht notwendig ist.

Aus den angegebenen Dimensionierungen ergibt sich im Vergleich zu DIN 4922, dass die Filterzone insgesamt mit gegenüber dem bekannten Stand der Technik kleineren, dafür aber einer insgesamt beträchtlich größeren Anzahl von Schlitzbrücken ausgestattet ist, wodurch sich die erwünschte Vergrößerung des freien Durchlasses im Bereich der Filterzone ergibt. Dabei müssen praktisch keinerlei Nachteile hinsichtlich der Stabilität des Stahlrohres in Kauf genommen werden. Da die Schlitzbrücken gegenüber DIN 4922 insgesamt verkleinert ausgeführt sind und dadurch deren Fertigung auch mit engeren Toleranzen möglich ist, ergibt sich der weitere Vorteil, dass die Schlitzbrückenöffnung (h) kleiner ausgeführt werden kann als 1 mm, wodurch sich zusätzlich eine verbesserte Filterwirkung ergibt.

Das erfindungsgemäße Stahlrohr kann nach einem weiteren Gedanken der Erfindung galvanisch verzinkt sein, dabei ist eine galvanische Verzinkung sowohl innen wie auch außen ohne weiteres möglich.

Da durch die verkleinerte Schlitzbrückenfilteranordnung Stabilitätsverluste des Stahlrohres gegenüber dem bekannten Stand der Technik nicht gegeben sind, kann das Stahlrohr gemäß vorliegender Erfindung ohne weiteres auch in einer Gesamtlänge von ca. 6 m ausgeführt sein, wodurch sich insbesondere bei tieferen Bohrbrunnen der Vorteil der Verwendung von insgesamt weniger Rohren als bislang ergibt. Dabei ist der vorgenannte Vorteil darin zu sehen, dass weniger Verbindungen zwischen einzelnen Rohren erforderlich sind.

Ein Ausführungsbeispiel der Erfindung ist in den beigefügten Zeichnungen dargestellt und wird im Folgenden näher beschrieben.

Es zeigen:

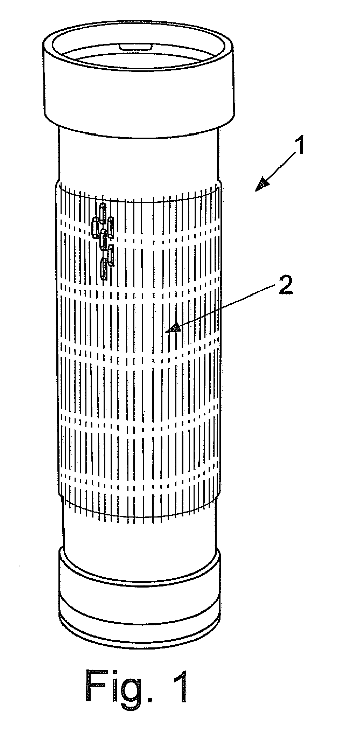

- Figur 1: eine stark schematisierte Perspektivdarstellung eines erfindungsgemäßen Stahlrohres für Bohrbrunnen
- Figur 2: eine Teilansicht des abgewickelten Mantelbereiches des Stahlrohres gemäß Figur 1
- Figur 3: einen Längsschnitt durch den abgewickelten Bereich des Stahlrohres gemäß Figur 2.

In den Zeichnungen ist mit dem Bezugszeichen 1 insgesamt ein Stahlrohr mit einer Filterzone 2 bezeichnet, wobei die Filterzone 2 in an sich bekannter Weise durch eine Schlitzbrückenfilteranordnung gebildet ist.

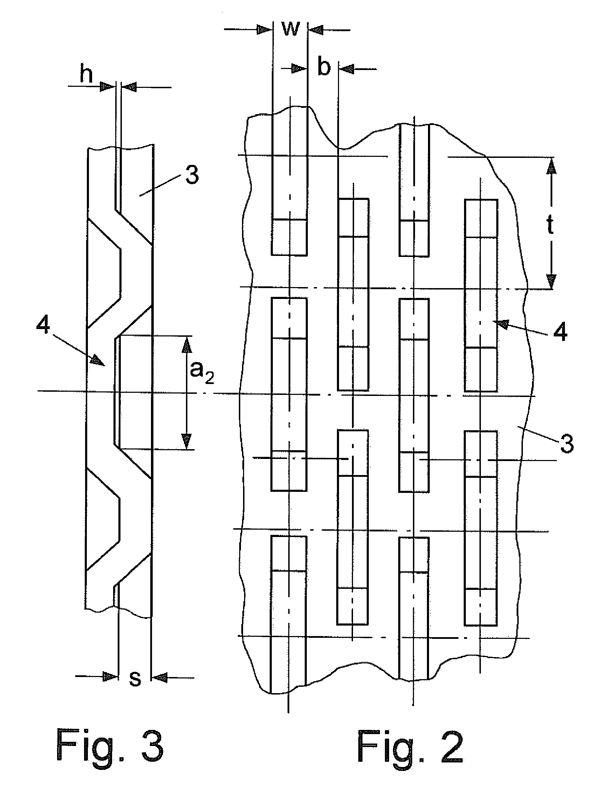

Die Schlitzbrückenfilteranordnung besteht, was aus den Figuren 2 und 3 besonders deutlich hervorgeht, aus einer Vielzahl von aus der Rohrwandung 3 herausgeprägten Schlitzbrücken 4, welche sich in Längsrichtung des Stahlrohres 1 erstrecken. Dabei sind die Schlitzbrücken 4 jeweils gruppenartig in Ringzonen auf dem Umfang des Stahlrohres 1 verteilt, und gruppenweise in Achsrichtung des Stahlrohres 1 einander überlappend sowie in Umfangsrichtung gegeneinander versetzt angeordnet.

Dieser grundsätzliche Aufbau entspricht dem Stand der Technik gemäß DIN 4922.

Die Besonderheit der hier beschriebenen Konstruktion besteht nun darin, dass die Dimensionierung der Schlitzbrücken derart gewählt ist, dass sich bezüglich der Filterzone 2 ein deutlich größerer freier Durchlass ergibt als bei vorbekannten Konstruktionen.

Beim Stand der Technik beträgt der freie Durchlass etwa 6 % der gesamten Filterzone 2, wohingegen beim Erfindungsgegenstand der freie Durchlass auf 8 bis 10 % erhöht werden konnte.

Dies wird erreicht dadurch, dass bei einer Wanddicke (s) von etwa 4 bis 6 mm die Schlitzbreite (w) etwa 4,5 mm, die Stegbreite (b) etwa 5,3 mm, die mittlere Schlitzlänge (a₂) etwa 17 mm, die Schlitzbrückenöffnung (h) etwa 0,5 bis 1 mm und die Teilung (t) etwa 37 mm beträgt.

Mit anderen Worten wird es hierdurch möglich, innerhalb der Filterzone 2 zwar im Vergleich zum Stand der Technik kleinere, dafür aber eine größere Anzahl von Schlitzbrücken 4 anzuordnen, so dass der freie Durchlass im oben angegebenen Umfang deutlich vergrößert werden kann.

Vorteilhaft dabei ist, dass die Stabilität des Stahlrohres 1 hierdurch praktisch nicht beeinträchtigt wird, so dass ein entsprechendes Stahlrohr 1 durchaus auch in Längen von 6 m hergestellt und benutzt werden kann.

Durch die im Vergleich zum Stand der Technik verkleinerte Ausführung der Schlitzbrücken 9, insbesondere deren Schlitzbreite w, ist eine Fertigung der Schlitzbrücken 4 mit engeren Toleranzen als bislang möglich, so dass durchaus auch extrem kleine Schlitzbrückenöffnungen (h) von beispielsweise 0,5 mm möglich sind. Dadurch wird die Filterwirkung im Sinne der Zurückhaltung auch feinerer Körnungen, deutlich verbessert.

Das Stahlrohr kann galvanisch verzinkt sein, dabei ist eine Verzinkung sowohl innen wie auch außen möglich.

Vorzugsweise ist das Stahlrohr 1 einstückig ausgeführt.

## Patentansprüche

1. Stahlrohr (1) mit einer Filterzone (2) in Schlitzbrückenfilteranordnung für Bohrbrunnen, wobei die Schlitzbrückenfilteranordnung aus einer Vielzahl von aus der Rohrwandung (3) herausgeprägten Schlitzbrücken (4) besteht, welche sich in Längsrichtung des Stahlrohres (1) erstrecken, jeweils gruppenartig in Ringzonen auf dem Umfang des Stahlrohres (1) und gruppenweise in Achsrichtung des Stahlrohres (1) einander überlappend sowie in Umfangsrichtung gegeneinander versetzt angeordnet sind, **dadurch gekennzeichnet, dass** der freie Durchlass der Filterzone (2) etwa 8 bis 10 % der Gesamtfläche der Filterzone (2) beträgt.

2. Stahlrohr nach Anspruch 1, **dadurch gekennzeichnet, dass** bei einer Wanddicke (s) des Stahlrohres (1) von etwa 4 bis 6 mm die Schlitzbreite (w) etwa 4,5 mm, die Stegbreite (b) etwa 5,3 mm, die mittlere Schlitzlänge (a₂) etwa 17 mm, die Schlitzbrückenöffnung (h) etwa 0,5 bis 1 mm und die Teilung (t) etwa 37 mm beträgt.

3. Stahlrohr nach Anspruch 1 oder 2, **dadurch gekennzeichnet, dass** das Stahlrohr (1) galvanisch verzinkt ist.

4. Stahlrohr nach einem der vorhergehenden Ansprüche, **dadurch gekennzeichnet, dass** das Stahlrohr (1) innen und außen galvanisch verzinkt ist.

5. Stahlrohr nach einem der vorhergehenden Ansprüche, **dadurch gekennzeichnet, dass** das Stahlrohr (1) eine Länge von ca. 6 m aufweist.

6. Stahlrohr nach einem der vorhergehenden Ansprüche, **dadurch gekennzeichnet, dass** das Stahlrohr (1) einstückig gefertigt ist.
